# EUROPEAN PATENT APPLICATION

(11) **EP 4 509 885 A1**
(43) Date of publication of application: **19.02.2025**
(21) Application number: 24151202.9
(22) Date of filing: 10.01.2024
(51) Int. Cl.: G02B 1/116, G02B 27/00, B60R 11/04, H05B 3/86

(54) **CONDUCTIVE FILM VEHICLE-MOUNTED LENS AND MANUFACTURING PROCESS THEREFOR**

(30) Priority: 15.08.2023 CN 202311028377
(71) Applicant: Jiangxi Phenix Optical Technology Co., Ltd., Shangrao, Jiangxi 334100 (CN)
(72) Inventor: LI, Bo, Ji'an, 343000 (CN); SHI, Feng, Shanghai, 200000 (CN); YAN, Tao, Shangrao, 334100 (CN); WANG, Fangmin, Shangrao, 334100 (CN); WU, Zongtao, Shangrao, 334100 (CN); YU, Ximiao, Huizhou, 516000 (CN); QIAN, Feng, Shangrao, 334100 (CN)
(74) Representative: Zaboliene, Reda

(57) **Abstract**

The present invention relates to the technical fields of film optics and vehicle-mounted images, and in particular to a conductive film vehicle-mounted lens and a manufacturing process therefor. The lens includes: a spherical or molded transparent base layer of an aspherical lens, a first antireflective film layer, a conductive film layer, a second antireflective film layer, an electrode, and an electrical connection layer integrated with a thermistor. An objective of the present invention is to provide a conductive film vehicle-mounted lens and a manufacturing process therefor. A window lens forming a camera monitoring system or a lidar device can be automatically heated, and the problem that the imaging and identification of the camera monitoring system or the lidar device are affected by the fogging of the camera lens due to rain and snow environments is solved.

## Description

### FIELD OF THE INVENTION

The present invention relates to the technical fields of film optics and vehicle-mounted images, and in particular to a conductive film vehicle-mounted lens and a manufacturing process therefor.

### BACKGROUND OF THE INVENTION

The process of science and technology leads the development trend of automobile industry. At present, a new energy vehicle is a synonymous with high technology in the field of vehicles. An auxiliary driving or automatic driving system of the new energy vehicle highly depends on the use of a camera monitoring system (CMS) and a lidar device. In the field of CMS imaging, the requirements on the image definition and precision are higher and higher.

However, in a rainy season or winter, due to the influence of the rain and snow environment, the camera lens is prone to fog and the definition is greatly reduced, in particular, the self-driving CMS and lidar device seriously limit imaging and identification. At present, there are mature solutions for the heating of a vehicle-mounted rearview mirror in the industry, but there is no solution for the heating of the CMS and the lidar device in the industry at present, which affects the development of new energy vehicles.

### SUMMARY OF THE INVENTION

To overcome the defects and shortcomings in the prior art, the present invention is to provide a conductive film vehicle-mounted lens and a manufacturing process therefor. A window lens forming a camera monitoring system or a lidar device can be automatically heated, and the problem that the imaging and identification of the camera monitoring system or the lidar device are affected by the fogging of the camera due to rain and snow environments is solved.

The present invention is achieved through the following technical solutions:
a conductive film vehicle-mounted lens includes:
a spherical or molded transparent base layer of an aspherical lens; a first antireflective film layer, formed on an outer surface of the transparent base layer and configured to reduce the reflection effect of the transparent base layer; a conductive film layer, formed on an inner surface of the transparent base layer; a second antireflective film layer, formed on a surface of the conductive film layer away from the transparent base layer, corresponding to the position of the inner surface of the transparent base layer, and configured to reduce the reflection effect of the conductive film layer; an electrode, formed on a surface of the conductive film layer away from the transparent base layer, corresponding to the position of an end face of the transparent base layer, and electrically connected to the conductive film layer; and an electrical connection layer integrated with a thermistor, arranged on one side of the electrode and electrically connected to the electrode.

The lens further includes a waterproof layer formed on a surface of the first antireflective film layer away from the transparent base layer.

The lens further includes a black film layer formed on the end face of the transparent base layer and configured to shield the electrode; and the black film layer is located between the transparent base layer and the conductive film layer.

The lens further includes a printing ink layer formed on a surface of the electrode away from the transparent base layer.

The electrical connection layer is an FPC or a welding wire.

The present invention further discloses a manufacturing process for a conductive film vehicle-mounted lens. The process includes the following steps:
cleaning a spherical or molded transparent base layer of an aspherical lens;
forming a black film layer on an end face of a transparent base layer through a metal absorption process;
forming a conductive film layer on a surface of the black film layer away from the transparent base layer through physical vapor deposition;
forming a second antireflective film layer on an inner surface of the transparent base layer through physical vapor deposition;
forming a first antireflective film layer on an outer surface of the transparent base layer through physical vapor deposition;
forming an electrode on a surface of the conductive film layer away from the transparent base layer, the position of the electrode corresponding to the corresponding position of the end face of the transparent base layer; and
attaching an electrical connection layer to one side of the electrode.

The forming mode of the electrode is one of screen printing, transfer printing or physical vapor deposition.

A printing ink layer is formed on a surface of the conductive film layer away from the transparent base layer, and the forming mode is one of screen printing, transfer printing or spin coating.

A water-proof layer is formed on a surface of the first antireflective film layer away from the transparent base layer through physical vapor deposition.

According to the conductive film vehicle-mounted lens of the present invention, the transparent base layer, the first antireflective film layer, the conductive film layer, the second antireflective film layer, the electrode and the electrical connection layer integrated with the thermistor are provided, and the electrical connection layer is electrified to the conductive film layer to heat the transparent base layer and other parts, so that fogging is avoided, the heating temperature of the conductive film layer is uniform, and the surface temperature is kept consistent; meanwhile, the reflection effects of the transparent base layer and the conductive film layer are reduced respectively through the first antireflective film layer and the second antireflective film layer, the film in an effective area is clearly visible, the maximum transmittance can reach 99%, and the edge area achieves low reflection and low transmittance, thereby effectively ensuring the imaging effect of the camera lens.

### BRIEF DESCRIPTION OF THE DRAWINGS

The present invention is further illustrated by the accompanying drawings, but embodiments in the accompanying drawings do not constitute any limitation to the present invention. Those of ordinary skill in the art may also derive other drawings from the following drawings without creative efforts:
FIG. 1 is a structural schematic diagram of a conductive film vehicle-mounted lens according to the present invention;
FIG. 2 is a layered schematic diagram of a conductive film vehicle-mounted lens according to the present invention;
FIG. 3 is a processing flowchart of a manufacturing process according to the present invention; and
FIG. 4 is a transmittance light-splitting curve chart of an active heating film.

### REFERENCE NUMERALS OF THE DRAWINGS

Transparent base layer 100, first antireflective film layer 101, conductive film layer 102, second antireflective film layer 103, electrical connection layer 104, water-proof layer 105, black film layer 106, printing ink layer 107, electrode 108, thermistor 109.

### DETAILED DESCRIPTION OF PREFERRED EMBODIMENTS

To make the foregoing objectives, features and advantages of the present invention more apparent and comprehensible, the specific embodiments of the present invention are described in detail below with reference to the accompanying drawings. In the following description, many specific details are illustrated for a thorough understanding of the present invention. However, the present invention may be implemented in many other ways different from those described herein. A person skilled in the art may make similar improvements without departing from the connotation of the present invention. Therefore, the present invention is not limited to the specific embodiments disclosed below.

In the description of the present invention, it should be understood that orientation or position relationships indicated by the terms such as "center", "longitudinal", "transverse", "length", "width", "thickness", "above", "below", "front", "back", "left", "right", "perpendicular", "horizontal", "top", "bottom", "inside", "outside", "clockwise", "anticlockwise", "axial direction", "radial direction", and "circumferential direction" are based on the orientation or position relationships shown in the accompanying drawings, and are merely intended to facilitate a simple description of the present invention, rather than indicating or implying that the mentioned device or element must have a particular orientation or must be constructed and operated in a particular orientation. Therefore, such terms should not be construed as limitations to the present invention.

In addition, terms "first" and "second" are used merely for the purpose of description, and shall not be construed as indicating or implying relative importance or implicitly indicating a quantity of indicated technical features. Therefore, a feature defined by "first" or "second" may explicitly indicate or implicitly include at least one of such features. In the description of the present invention, "multiple" means at least two, such as two and three unless otherwise explicitly and specifically defined.

The process of science and technology leads the development trend of automobile industry. At present, a new energy vehicle is a synonymous with high technology in the field of vehicles. An auxiliary driving or automatic driving system of the new energy vehicle highly depends on the use of a camera monitoring system (CMS) and a lidar device. In the field of CMS imaging, the requirements on the image definition and precision are higher and higher.

However, in a rainy season or winter, due to the influence of the rain and snow environment, the camera lens is prone to fog and the definition is greatly reduced, in particular, the self-driving CMS and lidar device seriously limit imaging and identification. At present, there are mature solutions for the heating of a vehicle-mounted rearview mirror in the industry, but there is no solution for the heating of the CMS and the lidar device in the industry at present, which affects the development of new energy vehicles.

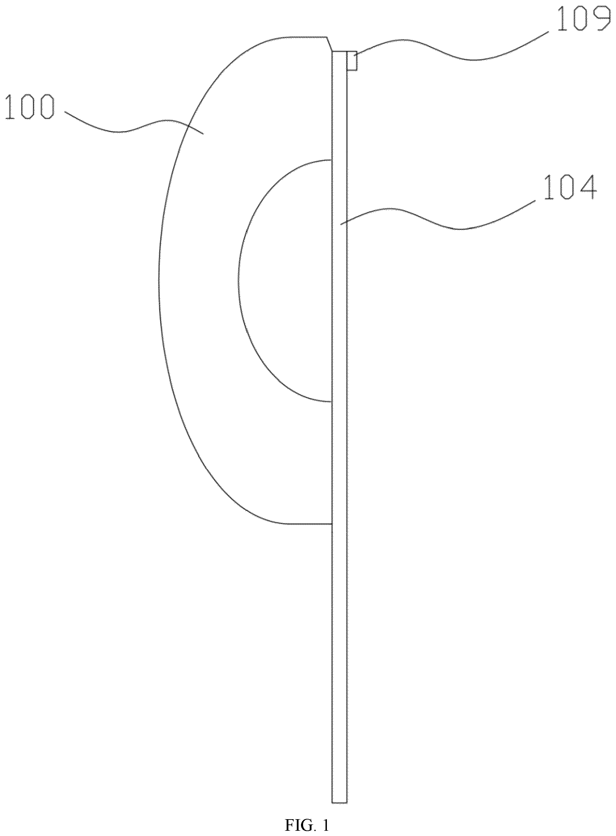

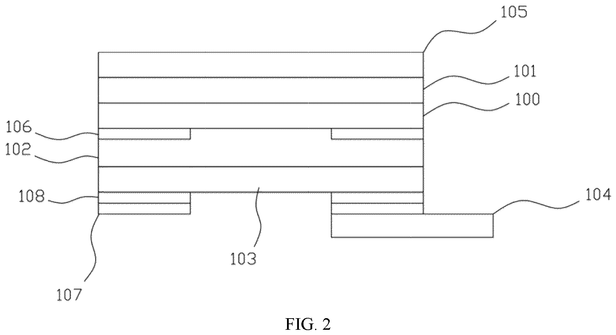

To solve the above problem, this embodiment discloses a conductive film vehicle-mounted lens with a structure as shown in FIG. 1 and FIG. 2. The lens includes:
a spherical or molded transparent base layer 100 of an aspherical lens, where the thickness range of the transparent base layer 100 is preferably 1-5 mm, the material is preferably K9 optical glass, BK7 optical class or PC plastic, and the structure is preferably of a spherical lens shape;
a first antireflective film layer 101, formed on an outer surface of the transparent base layer 100 and configured to reduce the reflection effect of the transparent base layer 100;
a conductive film layer 102, formed on an inner surface of the transparent base layer 100, where in this embodiment, conductive heating is performed by the conductive film layer 102, the resistance is regulated by regulating the thickness of the conductive film, generally, the film thickness is increased and the resistance is reduced, and the conductive film may be a film layer material such as ITO, AZO, IZ, IGZO and a silver nano-wire;
a second antireflective film layer 103, formed on a surface of the conductive film layer 102 away from the transparent base layer 100, corresponding to the position of the inner surface of the transparent base layer 100, and configured to reduce the reflection effect of the conductive film layer 102;
an electrode 108, formed on a surface of the conductive film layer 102 away from the transparent base layer 100, corresponding to the position of an end face of the transparent base layer 100, and electrically connected to the conductive film layer 102; and
an electrical connection layer 104 integrated with a thermistor 109, arranged on one side of the electrode 108 and electrically connected to the electrode 108, where the electrical connection layer 104 is preferably an FPC or a welding wire.

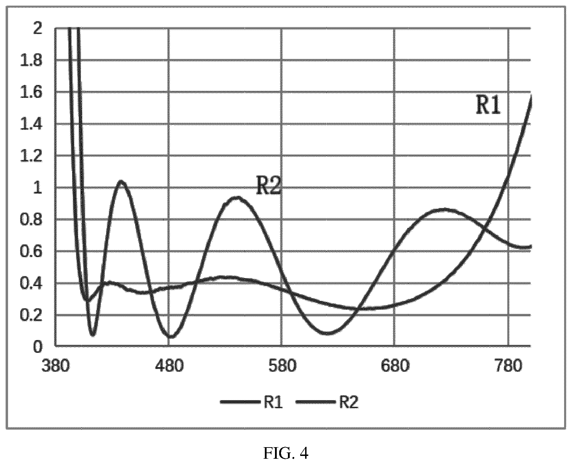

In this embodiment, the thickness range of the first antireflective film layer 101 and the second antireflective film layer 103 is 50-300 nm; before the first antireflective film layer 101 and the second antireflective film layer 103 are not coated, the single-side reflectivity of the transparent base layer 100 is ≥4%; and after the first antireflective film layer 101 and the second antireflective film layer 103 are coated, the single-side reflectivity of the transparent base layer 100 is reduced to below 1%, and the specific parameters may be referenced to FIG. 4, where R1 curve represents a light-splitting curve of an outer surface of the lens, and R2 curve represents a light-splitting curve of an inner surface of the lens.

Further, the lens further includes a black film layer 106 formed on an end face of the transparent base layer 100 and configured to shield the electrode 108; and the black film layer 106 is located between the transparent base layer 100 and the conductive film layer 102. In this embodiment, the thickness range of the black film layer 106 is 30-300 nm, the maximum reflectivity in the range of the visible light is less than 0.5%, and the transmittance in the range of 400-1800 nm is less than 0.5%, thereby achieving low reflection and low transmittance and effectively shielding the area of the electrode 108 of the conductive film layer 102.

Further, the lens further includes a water-proof layer 105 formed on a surface of the first antireflective film layer 101 away from the transparent base layer 100, the contact angle of the water-proof layer 105 is not less than 100°, and the thickness range of the water-proof layer 105 is 30-100 nm. In this embodiment, the water-proof layer 105 is formed by stacking multiple layers of water-proof films, is made of a fluorine-based polymer, and has high acid and alkali resistance, and the contact angle reaches 100° or more, so that the water-proof effect is achieved. After an experiment of rubbing steel wool are performed for 3000 times, the contact angle reaches 100° or more. In addition, the water-proof layer 105 further can resist oil and stain through the rigorous high-low-temperature resistance and salt spray experiments in industries such as mobile phones, so that oil stain and fingerprint in the mounting process can be avoided, and the wear resistance and the acid, alkali and salt spray resistance of the water-proof layer 105 can be enhanced.

Further, the lens further includes a printing ink layer 107 formed on a surface of the electrode 108 away from the transparent base layer 100, so that the metal electrode 108 is shielded, the appearance is effectively beautified and parasitic light is reduced.

The electrical connection layer 104 is an FPC or a welding wire.

Specifically, according to the conductive film vehicle-mounted lens of this embodiment, the transparent base layer 100, the first antireflective film layer 101, the conductive film layer 102, the second antireflective film layer 103, the electrode 108 and the electrical connection layer 104 integrated with the thermistor 109 are provided, and the electrical connection layer 104 is electrified to the conductive film layer 102 to heat the transparent base layer 100 and other parts, so that fogging is avoided, the heating temperature of the conductive film layer 102 is uniform, and the surface temperature is kept consistent; meanwhile, the reflection effects of the transparent base layer 100 and the conductive film layer 102 are reduced respectively through the first antireflective film layer 101 and the second antireflective film layer 103, the film in an effective area is clearly visible, the maximum transmittance can reach 99%, and the edge area achieves low reflection and low transmittance, thereby effectively ensuring the imaging effect of the camera lens.

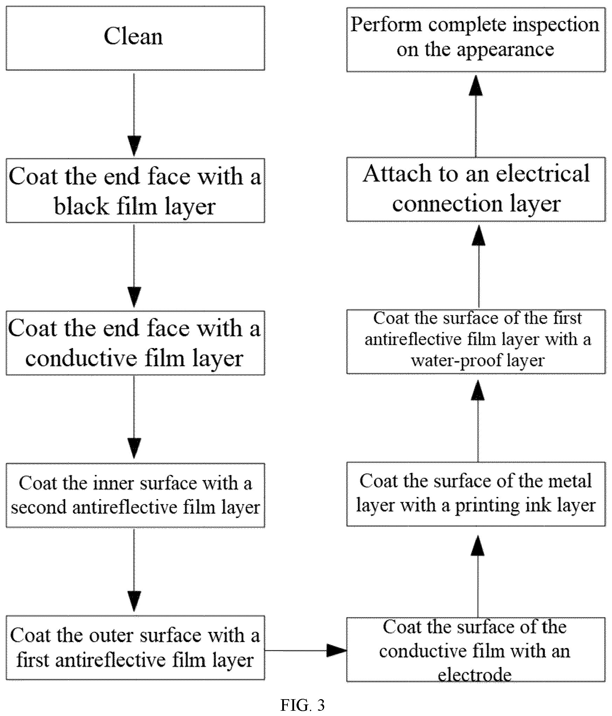

This embodiment further discloses a manufacturing process for a conductive film vehicle-mounted lens, which is used for manufacturing the conductive film vehicle-mounted lens. This embodiment describes the process with reference to FIG. 3. The process includes the following steps.

A spherical or molded transparent base layer 100 of an aspherical lens is cleaned. Generally, the transparent base layer 100 is placed at a temperature of 22±3°C and a humidity of 65±3% and then is dried after being ultrasonically cleaned with weak alkali, pure water and alcohol, so as to remove oil stains, dirt and dust spots from the surface. There are no defects such as dirt and water marks on the surface of the cleaned lens under a microscope.

A black film layer 106 is formed on an end face of the transparent base layer 100 through a metal absorption process. Generally, the black film layer 106 is coated at a temperature of 150°C and in a high vacuum environment.

A conductive film layer 102 is formed on a surface of the black film layer 106 away from the transparent base layer 100 through physical vapor deposition. Generally, the forming temperature of the conductive film layer 102 is 150°C, the environment is a high vacuum environment, and the forming thickness is 50-1000 nm.

A second antireflective film layer 103 is formed on an inner surface of the transparent base layer 100 through physical vapor deposition.

A first antireflective film layer 101 is formed on an outer surface of the transparent base layer 100 through physical vapor deposition. The forming temperature of the first antireflective film layer 101 and the second antireflective film layer 103 is 150°C, the environment is a high vacuum environment, and the forming thickness is 50-300 nm.

An electrode 108 is formed on a surface of the conductive film layer 102 away from the transparent base layer 100. The position of the electrode 108 corresponds to the corresponding position of the end face of the transparent base layer 100. The forming mode of the electrode 108 is one of screen printing, transfer printing or physical vapor deposition. The electrode is configured to communicate with the conductive film and play a role in conducting electricity, and may be silver paste, copper paste, silver copper paste, silver, copper, nickel and nickel chromium.

An electrical connection layer 104 is attached to one side of the electrode 108.

A printing ink layer 107 is formed on a surface of the conductive film layer 102 away from the transparent base layer 100, and the forming mode is one of screen printing, transfer printing or spin coating.

A water-proof layer 105 is formed on the first antireflective film layer 101 away from the transparent base layer 100 through physical vapor deposition. The forming thickness range of the water-proof layer 105 is 30-100 nm, the forming temperature is 80 ° C, and the environment is a vacuum environment.

Further, the printing ink layer 107 is formed on a surface of the conductive film layer 102 away from the transparent base layer 100, the forming mode is one of screen printing, transfer printing or physical vapor deposition, the forming temperature of the printing ink layer 107 is 22±3 ° C, and the humidity is 65±3%.

Further, the water-proof layer 105 is formed on a surface of the first antireflective film layer 101 away from the transparent base layer 100 through physical vapor deposition, the forming thickness range of the water-proof layer 105 is 30-100 nm, the temperature is 80 °C, and the environment is a vacuum environment.

Finally, it should be noted that the above embodiments are only used to describe the technical solutions of the present invention, but not to limit the protection scope of the present invention. Although the present invention is described in detail with reference to the preferred embodiments, those of ordinary skill in the art should understand that modification or equivalent substitution may be made on the technical solutions of the present invention without departing from the spirit and scope of the technical solutions of the present invention.

## Claims

1. A conductive film vehicle-mounted lens, comprising:
a spherical or molded transparent base layer of an aspherical lens;
a first antireflective film layer, formed on an outer surface of the transparent base layer and configured to reduce the reflection effect of the transparent base layer;
a conductive film layer, formed on an inner surface of the transparent base layer;
a second antireflective film layer, formed on a surface of the conductive film layer away from the transparent base layer, corresponding to the position of the inner surface of the transparent base layer, and configured to reduce the reflection effect of the conductive film layer;
an electrode, formed on a surface of the conductive film layer away from the transparent base layer, corresponding to the position of an end face of the transparent base layer, and electrically connected to the conductive film layer; and
an electrical connection layer integrated with a thermistor, arranged on one side of the electrode and electrically connected to the electrode.

2. The conductive film vehicle-mounted lens according to claim 1, further comprises a waterproof layer formed on a surface of the first antireflective film layer away from the transparent base layer.

3. The conductive film vehicle-mounted lens according to claim 1, further comprising a black film layer formed on the end face of the transparent base layer and configured to shield the electrode; and the black film layer is located between the transparent base layer and the conductive film layer.

4. The conductive film vehicle-mounted lens according to claim 1, further comprising a printing ink layer formed on a surface of the electrode away from the transparent base layer.

5. The conductive film vehicle-mounted lens according to claim 1, wherein the electrical connection layer is an FPC or a welding wire.

6. A manufacturing process for a conductive film vehicle-mounted lens, comprising the following steps:
cleaning a spherical or molded transparent base layer of an aspherical lens;
forming a black film layer on an end face of a transparent base layer through a metal absorption process;
forming a conductive film layer on a surface of the black film layer away from the transparent base layer through physical vapor deposition;
forming a second antireflective film layer on an inner surface of the transparent base layer through physical vapor deposition;
forming a first antireflective film layer on an outer surface of the transparent base layer through physical vapor deposition;
forming an electrode on a surface of the conductive film layer away from the transparent base layer, the position of the electrode corresponding to the corresponding position of the end face of the transparent base layer; and
attaching an electrical connection layer to one side of the electrode.

7. The manufacturing process for a conductive film vehicle-mounted lens according to claim 6, wherein the forming mode of the electrode is one of screen printing, transfer printing or physical vapor deposition.

8. The manufacturing process for a conductive film vehicle-mounted lens according to claim 6, wherein a printing ink layer is formed on a surface of the conductive film layer away from the transparent base layer, and the forming mode is one of screen printing, transfer printing or spin coating.

9. The manufacturing process for a conductive film vehicle-mounted lens according to claim 6, wherein a water-proof layer is formed on a surface of the first antireflective film layer away from the transparent base layer through physical vapor deposition.
